# EUROPEAN PATENT SPECIFICATION

(11) **EP 3 730 327 B1**
(45) Date of publication and mention of the grant of the patent: **16.06.2021**
(21) Application number: 20164175.0
(22) Date of filing: 19.03.2020
(51) Int. Cl.: B60K 1/00, B60K 17/16

(54) **VEHICLE DRIVING APPARATUS**
FAHRZEUGFAHRVORRICHTUNG
APPAREIL DE CONDUITE DE VÉHICULE

(30) Priority: 23.04.2019 JP 2019082351
(43) Date of publication of application: 28.10.2020
(73) Proprietor: TOYOTA JIDOSHA KABUSHIKI KAISHA, Toyota-shi, Aichi-ken 471-8571 (JP)
(72) Inventor: MICHISHITA, Masaya, Aichi-ken, 471-8571 (JP)
(74) Representative: J A Kemp LLP

(56) References cited:
- EP-A1- 2 878 857
- JP-A- 2003 294 110
- JP-A- 2005 098 477
- JP-A- 2007 278 372

## Description

### FIELD OF THE INVENTION

The present invention relates to a vehicle driving apparatus configured to output a drive force of an electric motor as a drive force source, to right and left drive wheels through a differential mechanism.

### BACKGROUND OF THE INVENTION

There is proposed a vehicle driving apparatus that includes: an electric motor as a drive force source; a speed reduction mechanism configured to boost the drive force of the electric motor and to output the drive force; a differential mechanism configured to distribute the drive force outputted from the speed reduction mechanism, to a pair of drive shafts connected to respective right and left drive wheels; and a differential limitation mechanism including a friction clutch, and configured to control an engaging torque of the friction clutch, for controlling a differential limiting torque by which a differential effect of the differential mechanism is to be limited. JP-2003-294110A discloses a construction of such a vehicle driving apparatus as shown in FIG. 1 of the Japanese Patent Application Publication.

### SUMMARY OF THE INVENTION

By the way, in the above-described vehicle driving apparatus, the electric motor generates heat when being driven, and the differential limitation mechanism also generates heat when being operated. In the differential limitation mechanism, for example, the friction clutch included in the differential limitation mechanism constitutes a heated portion that generates heat. In the vehicle driving apparatus disclosed in the above-identified JP-2003-294110A, the electric motor and the differential limitation mechanism are disposed in respective positions that are close to each other, so that each of the electric motor and the differential limitation mechanism receives heat that is generated by the other of the electric motor and the differential limitation mechanism. Therefore, for example, the heat, which is generated by the electric motor when the electric motor is driven, is transmitted to the differential limitation mechanism, and a heat load applied to the differential limitation mechanism is increased. When the heat load applied to the differential limitation mechanism is increased, a certain length of time is required to cool the differential limitation mechanism, thereby requiring some measures such as limitation on an operation time of the differential limitation mechanism and consequently resulting in problem of efficiency reduction.

The present invention was made in view of the background art described above. It is therefore an object of the present invention to provide a vehicle driving apparatus including an electric motor, a speed reduction mechanism, a differential mechanism to which a drive force of the electric motor is to be transmitted through the speed reduction mechanism, and a differential limitation mechanism configured to limit a differential effect provided by the differential mechanism, wherein the vehicle driving apparatus is capable of restraining a heat load that could be increased with each of the electric motor and the differential limitation mechanism receiving heat generated by the other of the electric motor and the differential limitation mechanism.

The above-described object indicated above is achieved according to the following aspects of the present invention.

According to a first aspect of the invention, there is provided a driving apparatus as defined in appended claim 1. It is possible to interpret that the speed reduction mechanism and the differential mechanism cooperate with each other to constitute a drive-force transmitting device that is configured to transmit the drive force of the electric motor to the pair of drive shafts, and that the electric motor and the differential limitation mechanism are disposed on respective opposite sides of the drive-force transmitting device. For example, the drive-force transmitting device includes a pair of gears that mesh with each other, wherein the pair of gears consists of a gear included in the speed reduction mechanism and a gear included in the differential mechanism, such that the drive force is to be transmitted between the speed reduction mechanism and the differential mechanism through the pair of gears, and wherein the electric motor and the differential limitation mechanism are disposed on respective opposite sides of the pair of gears in a direction parallel to axes of the pair of gears.

According to a second aspect of the invention, in the vehicle driving apparatus according to the first aspect of the invention, the vehicle driving apparatus comprises a casing, wherein the speed reduction mechanism and the differential mechanism are stored together with a lubricant in a first storage space that is defined inside the casing, wherein the differential limitation mechanism is stored in a second storage space that is defined inside the casing, and wherein the first and second storage spaces are fluid-tightly separated from each other by at least one sealing member.

According to a third aspect of the invention, in the vehicle driving apparatus according to the second aspect of the invention, the at least one sealing member is disposed in a position that inhibits the lubricant stored in the first storage space from being brought into contact with surroundings of at least one heated portion of the differential limitation mechanism.

According to a fourth aspect of the invention, in the vehicle driving apparatus according to any one of the first through third aspects of the invention, the electric motor and the differential limitation mechanism are disposed on the respective opposite sides of the speed reduction mechanism in a width direction of the vehicle, and are disposed on respective opposite sides of the differential mechanism in the width direction of the vehicle.

In the vehicle driving apparatus according to the first aspect of the invention, the electric motor and the differential limitation mechanism are disposed on respective opposite sides of the speed reduction mechanism, and are disposed on respective opposite sides of the differential mechanism. Therefore, it is possible to restrain each of the electric motor and the differential limitation mechanism from receiving heat generated by the other of the electric motor and the differential limitation mechanism, and accordingly to restrain increase of a heat load applied to each of the electric motor and the differential limitation mechanism.

In the vehicle driving apparatus according to the second aspect of the invention, it is possible to restrain the lubricant stored in the first storage space, from being moved to the second storage space to receive the heat from the differential limitation mechanism stored in the second storage space, and accordingly to restrain the heat generated in the differential limitation mechanism, from being transmitted to the electric motor through the lubricant.

In the vehicle driving apparatus according to the third aspect of the invention, it is possible to minimize transfer of heat from the differential limitation mechanism to the lubricant stored in the first storage space.

In the vehicle driving apparatus according to the fourth aspect of the invention, the electric motor and the differential limitation mechanism are disposed on the respective opposite sides of the speed reduction mechanism in the width direction of the vehicle, and are disposed on respective opposite sides of the differential mechanism in the width direction of the vehicle, so that the electric motor and the differential limitation mechanism are disposed in respective positions that are distant from each other in the width direction of the vehicle, thereby making it possible to restrain each of the electric motor and the differential limitation mechanism from receiving heat generated by the other of the electric motor and the differential limitation mechanism,

### BRIEF DESCRIPTION OF THE DRAWINGS

FIG. 1 is a view schematically showing a construction of a vehicle to which the present invention is applied;
FIG. 2 is a cross sectional view for explaining a construction of a rear-wheel driving apparatus for driving rear wheels of the vehicle of FIG. 1;
FIG. 3 is a view showing, in enlargement, a part surrounded by square in FIG. 2; and
FIG. 4 is a cross sectional view for explaining an internal structure of a differential limitation mechanism shown in FIG. 3.

### DETAILED DESCRIPTION OF PREFERRED EMBODIMENT

Hereinafter, a preferred embodiment of the invention will be described in detail with reference to the accompanying drawings. The figures of the drawings are simplified or deformed as needed, and each portion is not necessarily precisely depicted in terms of dimension ratio, shape, etc.

### EMBODIMENT

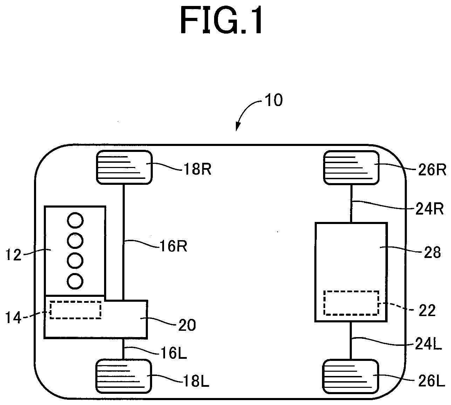

FIG. 1 is a view schematically showing a construction of a vehicle 10 to which the present invention is applied. As shown in FIG. 1, the vehicle 10 is an electric four-wheel drive vehicle that is provided with a front-wheel driving apparatus 20 and a rear-wheel driving apparatus 28. The front-wheel driving apparatus 20 stores therein an electric motor 14 and an engine 12 that is constituted by an internal combustion engine such as a gasoline engine or a diesel engine, which is configured to generate a drive force by combustion of a fuel, and is configured to transmit a drive force outputted by the electric motor 14 and/or a drive force outputted by the engine 12, to front right and left wheels 18R, 18L through respective front right and left axles 16R, 16L. The rear-wheel driving apparatus 28 stores therein an electric motor 22, and is configured to transmit a drive force outputted by the electric motor 22, to rear right and left wheels 26R, 26L through respective rear right and left axles 24R, 24L. It is noted that the rear-wheel driving apparatus 28 corresponds to "driving apparatus" recited in the appended claims.

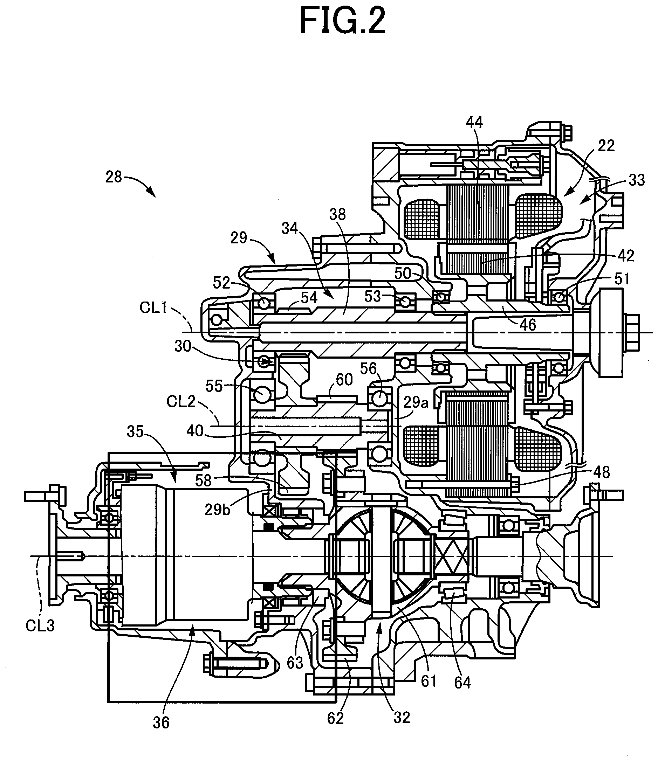

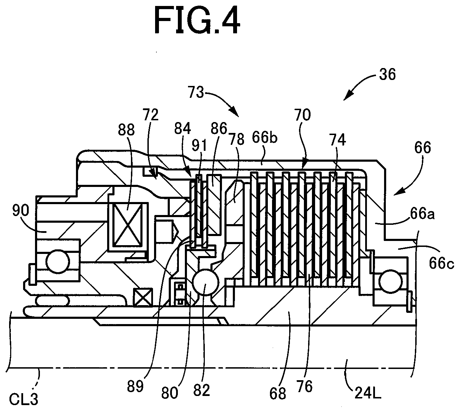

FIG. 2 is a cross sectional view for explaining a construction of the rear-wheel driving apparatus 28 shown in FIG. 1. The rear-wheel driving apparatus 28 includes: a non-rotary member in the form of a casing 29; a drive force source in the form of the above-described electric motor 22; a speed reduction mechanism 30; a differential mechanism 32 and a differential limitation mechanism (LSD: Limited Slip Differential) 36. The electric motor 22, speed reduction mechanism 30, differential mechanism 32 and differential limitation mechanism 36 are stored in the casing 29. The speed reduction mechanism 30 is configured to reduce a speed of rotation transmitted from the electric motor 22 and to output the rotation. The differential mechanism 32 is configured to distribute the drive force outputted by the speed reduction mechanism 30, to the rear right and left axles 24R, 24L that are connected to the respective rear right and left wheels 26R, 26L. The differential limitation mechanism 36 includes a friction clutch 73 (see FIG. 4), and is configured to control an engaging torque of the friction clutch 73, so as to control a differential limiting torque by which a differential effect provided by the differential mechanism 32 is to be limited. It is noted that the rear right and left axles 24R, 24L correspond to "pair of drive shafts" recited in the appended claims, and that rear right and left wheels 26R, 26L correspond to "right and left drive wheels" recited in the appended claims. It is also noted that the speed reduction mechanism 30 and the differential mechanism 32 cooperate with each other to constitute "drive-force transmitting device" that is recited in the appended claims.

Inside the casing 29, there are defined a motor storage space 33, a gear storage space 34 and an LSD storage space 35. The electric motor 22 is stored in the motor storage space 33. The speed reduction mechanism 30 and the differential mechanism 32 are stored in the gear storage space 34. The differential limitation mechanism 36 is stored in the LSD storage space 35. The motor storage space 33 and the gear storage space 34 are partitioned from each other by a first partition wall 29a of the casing 29. The gear storage space 34 and the LSD storage space 35 are partitioned from each other by a second partition wall 29b of the casing 29. It is noted that the gear storage space 34 and the LSD storage space 35 correspond to "first storage space" and "second storage space" defined in the appended claims, respectively.

In the motor storage space 33, there is stored a coolant for cooling the electric motor 22. In the gear storage space 34, there is stored a lubricant for lubricating the speed reduction mechanism 30 and the differential mechanism 32. An oil, which is freely movable between the motor storage space 33 and the gear storage space 34, serves commonly as the coolant for cooling the electric motor 22 and as the lubricant for lubricating the speed reduction mechanism 30 and the differential mechanism 32. Meanwhile, no oil is stored in the LSD storage space 35.

The rear-wheel driving apparatus 28 includes rotary members that are disposed on three axes consisting of a first axis CL1, a second axis CL2 and a third axis CL3 that are parallel to one another. The electric motor 22 and a drive shaft 38 are disposed on the first axis CL1. A counter shaft 40 is disposed on the second axis CL2. The differential mechanism 32 and the differential limitation mechanism 36 are disposed on the third axis CL3.

The electric motor 22 includes a rotor 42, a stator 44 disposed on an outer peripheral side of the rotor 42 and a rotor shaft 46 by which the rotor 42 is rotatably supported. Each of the rotor 42 and the stator 44 is constituted by a plurality of steel plates that are laminated on each other. The stator 44 is unrotatably fixed to the casing 29 through bolts 48. The rotor 42 is fixed at its inner peripheral portion to the rotor shaft 46, so as to be rotatable integrally with the rotor shaft 46. The rotor shaft 46 is supported by the casing 29 through a pair of bearings 50, 51 that are provided in respective axially opposite end portions of the rotor shaft 46, such that the rotor shaft 46 is rotatable about the first axis CL1.

The drive shaft 38 is splined at its axial end portion to the rotor shaft 46, so as to be rotated integrally with the rotor shaft 46. The drive shaft 38 is supported by the casing 29 through a pair of bearings 52, 53 that are provided in respective axially opposite end portions of the drive shaft 38, such that the drive shaft 38 is rotatable about the first axis CL1. The drive shaft 38 is provided with a drive gear 54 that meshes with a driven gear 58 that will be described later.

The counter shaft 40 is supported by the casing 29 through a pair of bearings 55, 56 that are provided in respective axially opposite end portions of the counter shaft 40, such that the counter shaft 40 is rotatable about the second axis CL2. The counter shaft 40 is provided with a driven gear 58 and a differential drive pinion gear 60. The driven gear 58 meshes with the drive gear 54 of the drive shaft 38. The differential drive pinion gear 60 meshes a differential ring gear 62 of the differential mechanisms 32, which will be describe later. It is noted that the differential drive pinion gear 60 and the differential ring gear 62 correspond to "pair of gears (included in the drive-force transmitting device)" that is recited in the appended claims.

The speed reduction mechanism 30 includes the drive gear 54 of the drive shaft 38 and the driven gear 58 of the counter shaft 40, which mesh with each other. The number of teeth of the drive gear 54 is smaller than the number of teeth of the driven gear 58, so that a speed of rotation transmitted from the electric motor 22 to the speed reduction mechanism 30 is reduced, and outputted to the differential mechanism 32 through the differential drive pinion gear 60, which is disposed on the counter shaft 40 and which is included in the speed reduction mechanism 30, as well as the driven gear 58.

The differential mechanism 32 includes a differential casing 61 and the above-described differential ring gear 62 that meshes with the differential drive pinion gear 60 of the speed reduction mechanism 30, and is configured to distribute the drive force outputted from the speed reduction mechanism 30, to the rear axles 24R, 24L, while allowing rotation of each of the axles 24R, 24L relative to the other of the axles 24R, 24L. The differential mechanism 32 is supported by the casing 29 through a pair of bearings 63, 64 such that the differential mechanism 32 is rotatable about the third axis CL3. The differential mechanism 32 is constituted by a well-known differential gear device including bevel gears. Thus, since the differential mechanism 32 is a known mechanism, the detail descriptions will not be provided in the present specification.

The differential limitation mechanism 36 is disposed to be adjacent to the differential mechanism 32 in a direction of the third axis CL3, i.e., a width direction of the vehicle 10. The differential limitation mechanism 36 includes the above-described friction clutch 73, and is configured to control the differential limiting torque (by which the differential effect provided by the differential mechanism 32 is to be limited), by controlling the engaging torque of the friction clutch 73.

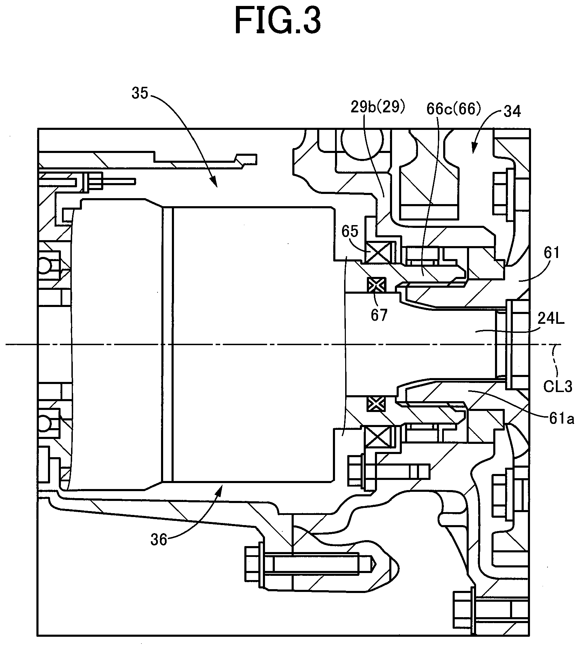

FIG. 3 is a view showing in enlargement a part surrounded by square in FIG. 2, namely, a portion of the rear-wheel driving apparatus 28 in which the differential limitation mechanism 36 is disposed. The differential limitation mechanism 36 is located on an outer peripheral side of the rear left axle 24L. The differential casing 61 is splined at its end portion 61a to a small-diameter cylindrical portion 66c of a clutch drum 66 that is an input rotary member of the differential limitation mechanism 36. The end portion 61a is one of opposite end portions (that are opposite to each other in the direction of the third axis CL3) of the differential casing 61, wherein the one of the opposite end portions is on a side of the rear left wheel 26L. Therefore, the differential casing 61 of the differential mechanism 32 and the clutch drum 66 of the differential limitation mechanism 36 are to be rotated integrally with each other.

Further, as shown in FIG. 3, the second partition wall 29b has a through-hole that receives therein the small-diameter cylindrical portion 66c of the clutch drum 66 that is an end portion of the clutch drum 66 located on a side of the differential mechanism 32 in the direction of the third axis CL3. A first sealing member 65 is provided between an outer circumferential surface of the small-diameter cylindrical portion 66c of the clutch drum 66 and an inner peripheral end portion of the second partition wall 29b which defines the above-described through-hole. Thus, the first sealing member 65 is disposed in a position that inhibits the oil (lubricant) from being moved through a gap between the inner peripheral end portion of the second partition wall 29b and the outer circumferential surface of the small-diameter cylindrical portion 66c of the clutch drum 66. Further, a second sealing member 67 is provided between an inner circumferential surface of the small-diameter cylindrical portion 66c of the clutch drum 66 and an outer circumferential surface of the rear left axle 24L. Thus, the second sealing member 67 is disposed in a position that inhibits the oil (lubricant) from being moved through a gap between inner circumferential surface of the small-diameter cylindrical portion 66c of the clutch drum 66 and the outer circumferential surface of the rear left axle 24L. Therefore, owing to provision of the first and second sealing members 65, 67, it is possible to inhibit the oil being moved between the gear storage space 34 and the LSD storage space 35. It is noted that each of the first and second sealing members 65, 67 corresponds to "at least one sealing member" recited in the appended claims.

FIG. 4 is a cross sectional view for explaining an internal structure of the differential limitation mechanism 36. It is noted that the differential limitation mechanism 36 is constructed substantially symmetrically about the third axis CL3, so that a lower half of the differential limitation mechanism 36 is not shown in FIG. 4.

The differential limitation mechanism 36 includes: the above-described clutch drum 66 that is splined to the differential casing 61; a clutch hub 68 that is splined to the rear left axle 24L so as to be rotated integrally with the rear left axle 24L; a main friction-engaging-plate set 70 that is provided between the clutch drum 66 and the clutch hub 68; and a pressing device 72 configured to press the main friction-engaging-plate set 70. The main friction-engaging-plate set 70 and the pressing device 72 cooperate with each other to constitute the above-described friction clutch 73 through which a torque is to be transmitted between the clutch drum 66 and the clutch hub 68.

The clutch drum 66 is a stepped cylindrical member that includes: a disk plate portion 66a; a large-diameter cylindrical portion 66b that is connected to an outer peripheral end portion of the disk plate portion 66a; and the above-described small-diameter cylindrical portion 66c that is connected to an inner peripheral end portion of the disk plate portion 66a. The clutch drum 66 is rotatable about the third axis CL3.

The clutch hub 68 is a cylindrical member having an axial through-hole through which the rear left axle 24L passes. The clutch hub 68 and the rear left axle 24L are splined to each other, so as to be rotated integrally with each other.

The main friction-engaging-plate set 70 is disposed between the clutch hub 68 and the large-diameter cylindrical portion 66b of the clutch drum 66, and consists of a plurality of outside friction plates 74 and a plurality of inside friction plates 76 that are alternately arranged in the direction of the third axis CL3. The outside friction plates 74 are splined to an inner circumferential surface of the large-diameter cylindrical portion 66b of the clutch drum 66. The inside friction plates 76 are splined to an outer circumferential surface of the clutch hub 68.

The pressing device 72 includes a first cam member 78, a second cam member 80, a plurality of balls 82, an auxiliary friction-engaging-plate set 84, an armature 86 and an electromagnetic solenoid 88. The first cam member 78 serves as a piston that is to press the main friction-engaging-plate set 70. The balls 82 are interposed between the first and second cam members 78, 80 in the direction of the third axis CL3. The auxiliary friction-engaging-plate set 84 is disposed on an outer peripheral side of the second cam member 80. The armature 86 is disposed to be adjacent to the auxiliary friction-engaging-plate set 84 in the direction of the third axis CL3. The electromagnetic solenoid 88 is disposed on one of opposite sides, in the direction of the third axis CL3, of the auxiliary friction-engaging-plate set 84, which is remote from the armature 86.

The first cam member 78 is a disk-shaped member, and is splined at its inner peripheral portion to the clutch hub 68. The first cam member 78 extends radially outwardly from the clutch hub 68, such that at least an outer peripheral portion of the first cam member 78 is adjacent to the main friction-engaging-plate set 70 in the direction of the third axis CL3, so as to press the main friction-engaging-plate set 70. Further, the first cam member 78 has an opposed surface opposed to the second cam member 80 in the direction of the third axis CL3. The above-described plurality of balls 82 are received in respective grooves that are formed in an inner peripheral-side portion of the opposed surface of the first cam member 78. The number of the grooves is the same as the number of the balls 82.

The second cam member 80 is a disk-shaped member having an L-shaped cross section, and is slidably fitted on an outer circumferential surface of the clutch hub 68. The second cam member 80 has an opposed surface opposed to the above-described opposed surface of the first cam member 78 in the direction of the third axis CL3. The above-described plurality of balls 82 are received in respective grooves that are formed in the opposed surface of the second cam member 80. That is, each of the balls 82 are received in a corresponding one of the grooves formed in the opposed surface of the first cam member 78 and in a corresponding one of the grooves formed in the opposed surface of the second cam member 80. The number of the grooves of the second cam member 80 also is the same as the number of the balls 82. Further, at least one inside friction plate 89, which constitutes a part of the auxiliary friction-engaging-plate set 84, is splined to an outer circumferential surface of the second cam member 80.

The balls 82 are sandwiched between the first and second cam members 78, 80 such that each of the balls 82 is in contact with a corresponding one of the above-described grooves formed in the first cam member 78 and a corresponding one of the above-described grooves formed in the second cam member 80. Each of the grooves of the first and second cam members 78, 80 is an arcuate-shaped groove extending in a circumferential direction of a corresponding one of the first and second cam members 78, 80, such that a depth of the groove is reduced in a direction away from a circumferential center of the groove toward either one of circumferentially opposite ends of the groove.

When a rotational speed of the first cam member 78 and a rotational speed of the second cam member 80 become different from each other, each of the balls 82 is moved toward one of the circumferentially opposite ends of the groove, namely, in a direction in which the depth of the groove is reduced, whereby the first and second cam members 78, 80 are forced away from each other in the direction of the third axis CL3. In this instance, since the second cam member 80 is inhibited from being moved in the direction of the third axis CL3, the first cam member 78 is moved toward the main friction-engaging-plate set 70 in the direction of the third axis CL3 as a result of the difference of the rotational speeds of the respective first and second cam members 78, 80, so that the first cam member 78 is caused to press the main friction-engaging-plate set 70.

The auxiliary friction-engaging-plate set 84 includes the above-described at least one inside friction plate 89 splined to the outer circumferential surface of the second cam member 80 and at least one outside friction plate 91 splined to the inner circumferential surface of the large-diameter cylindrical portion 66b of the clutch drum 66. The at least one inside friction plates 89 and the at least one outside friction plates 91 are alternately arranged in the direction of the third axis CL3.

The armature 86 has a disk shape, and is located in a position adjacent to the auxiliary friction-engaging-plate set 84 in the direction of the third axis CL3. The armature 86 is splined at its outer peripheral portion to the inner circumferential surface of the large-diameter cylindrical portion 66b of the clutch drum 66.

The electromagnetic solenoid 88 is unrotatably held by the housing 90 as the non-rotary member. When an electric current is not supplied to the electromagnetic solenoid 88, the engaging torque of the friction clutch 73 is zero, namely, the engaging torque of each of the main friction-engaging-plate set 70 and the auxiliary friction-engaging-plate set 84 is zero. Therefore, substantially no torque is transmitted between the clutch drum 66 and the clutch hub 68, so that a differential effect provided by the differential mechanism 32 is not limited.

When the electric current is supplied to the electromagnetic solenoid 88, a magnetic flux is generated around the electromagnetic solenoid 88 whereby the armature 86 is attracted toward the auxiliary friction-engaging-plate set 84. Since the auxiliary friction-engaging-plate set 84 is pressed by the armature 86 that is attracted toward the auxiliary friction-engaging-plate set 84, the engaging torque is generated in the auxiliary friction-engaging-plate set 84. When the engaging torque is generated in the auxiliary friction-engaging-plate set 84 with a rotational speed of the rear right axle 24R and a rotational speed of the rear left axle 24L being different from each other, the rotational speed of the first cam member 78 and the rotational speed of the second cam member 80 become different from each other. Therefore, the first cam member 78 is caused to press the main friction-engaging-plate set 70, and accordingly the engaging torque is generated in the main friction-engaging-plate set 70 whereby the differential effect provided by the differential mechanism 32 is limited. The armature 86 is attracted toward the auxiliary friction-engaging-plate set 84 by a force that is increased in proportion with increase of the electric current supplied to the electromagnetic solenoid 88. Thus, the first cam member 78 is caused to press the main friction-engaging-plate set 70 by a force that is also increased in proportion with increase of the electric current supplied to the electromagnetic solenoid 88. Therefore, in proportion with increase of the electric current supplied to the electromagnetic solenoid 88, a transmitting torque of the main friction-engaging-plate set 70 is increased and a differential limiting torque limiting the differential effect provided by the differential mechanism 32 is increased. It is noted that the main friction-engaging-plate set 70 and the auxiliary friction-engaging-plate set 84 may be referred also to as "main friction-clutch portion" and "auxiliary friction-clutch portion", respectively.

By the way, in the rear-wheel driving apparatus 28, the electric motor 22 generates heat when being driven, and the electromagnetic solenoid 88 of the differential limitation mechanism 36 also generates heat when being operated with the electric current being supplied thereto. Further, in process of operation of the differential limitation mechanism 36, heat is generated by friction acting between the friction plates 74, 76, 89, 91 of the main and auxiliary friction-engaging-plate sets 70, 84. Thus, in the rear-wheel driving apparatus 28, there are two heat sources in the form of the electric motor 22 and the differential limitation mechanism 36. Therefore, for example, if the heat generated in the electric motor 22 is transmitted to the differential limitation mechanism 36, the differential limitation mechanism 36 is heated to a high temperature, thereby requiring a certain length of time to cool the differential limitation mechanism 36 and accordingly limiting the operation of the differential limitation mechanism 36. As a result of the limitation on the operation of the differential limitation mechanism 36, there is a risk that a performance of the rear-wheel driving apparatus 28 could be reduced. Further, if the heat generated in the differential limitation mechanism 36 is transmitted to the electric motor 22, the operation of the electric motor 22 is limited whereby there is a risk that the performance of the rear-wheel driving apparatus 28 could be reduced.

On the other hand, in the rear-wheel driving apparatus 28 constructed according to the present embodiment, as shown in FIG. 2, the electric motor 22 and the differential limitation mechanism 36 are disposed on respective opposite sides of the speed reduction mechanism 30 in a direction parallel to the axes CL1, CL2, CL3, namely, in the width direction of the vehicle 10 (corresponding to right and left directions as seen in FIG. 2), and are disposed on respective opposite sides of the differential mechanism 32 in the width direction of the vehicle 10. In other words, the electric motor 22 and the differential limitation mechanism 36 are disposed on respective opposite sides of the above-described drive-force transmitting device (that is constituted by the speed reduction mechanism 30 and the differential mechanism 32) in the width direction of the vehicle 10. Therefore, with the speed reduction mechanism 30 and the differential mechanism 32 being disposed between the electric motor 22 and the differential limitation mechanism 36, the electric motor 22 and the differential limitation mechanism 36 are placed in respective positions that are distant from each other, so that heat transfer between the electric motor 22 and the differential limitation mechanism 36 can be restrained, namely, it is possible to restrain each of the electric motor 22 and the differential limitation mechanism 36 from receiving heat that is generated by the other of the electric motor 22 and the differential limitation mechanism 36.

Further, as shown in FIG. 3, the gear storage space 34 in which the speed reduction mechanism 30 and the differential mechanism 32 are stored and the LSD storage space 35 in which the differential limitation mechanism 36 is stored are partitioned from each other by the second partition wall 29b of the casing 29, and the gear storage space 34 and the LSD storage space 35 are fluid-tightly separated from each other by the first and second sealing members 65, 67.

The oil stored in the gear storage space 34 can flow into also the motor storage space 33, so that the oil stored in the gear storage space 34 receives heat that is generated when the electric motor 22 is driven. Therefore, if the oil flows into also the LSD storage space 35, there is a risk that the heat could be transferred between the electric motor 22 and the differential limitation mechanism 36 through the oil. However, in the present embodiment, the first and second sealing members 65, 67 inhibit the oil from being moved between the gear storage space 34 and the LSD storage space 35, it is possible to restrain the heat transfer through the oil between the two storage spaces 34, 35.

Further, the first and second sealing members 65, 67 are disposed in respective positions that inhibit the oil stored in the gear storage space 34 from being brought into contact with surroundings of the electromagnetic solenoid 88 and the main and auxiliary friction-engaging-plate sets 70, 84 that are heated portions of the differential limitation mechanism 36. Specifically described, as shown in FIG. 3, the first and second sealing members 65, 67 are disposed in respective positions that do not overlap with the electromagnetic solenoid 88 and the main and auxiliary friction-engaging-plate sets 70, 84 (that are the heated portions of the differential limitation mechanism 36) as viewed in a radially outward direction from the third axis CL3. That is, the first and second sealing members 65, 67 are disposed in respective positions that are different or spaced from the electromagnetic solenoid 88 and the main and auxiliary friction-engaging-plate sets 70, 84 in the direction of the third axis CL3.

Owing to the above arrangement, the oil stored in the gear storage space 34 is inhibited from being brought into contact with the surroundings of the electromagnetic solenoid 88 and the main and auxiliary friction-engaging-plate sets 70, 84, and the first and second sealing members 65, 67 are avoided from receiving heat generated in the electromagnetic solenoid 88 and the main and auxiliary friction-engaging-plate sets 70, 84. Therefore, it is possible to restrain the heat generated in the differential limitation mechanism 36, from being transmitted through the first and second sealing members 65, 67 to the oil stored in the gear storage space 34.

As described above, in the present embodiment, the electric motor 22 and the differential limitation mechanism 36 are disposed on respective opposite sides of the speed reduction mechanism 30, and are disposed on respective opposite sides of the differential mechanism 32. Therefore, it is possible to restrain each of the electric motor 22 and the differential limitation mechanism 36 from receiving heat generated by the other of the electric motor 22 and the differential limitation mechanism 36, and accordingly to restrain increase of a heat load applied to each of the electric motor 22 and the differential limitation mechanism 36.

In the present embodiment, it is possible to restrain the oil stored in the gear storage space 34, from being moved to the LSD storage space 35 to receive the heat from the differential limitation mechanism 36 stored in the LSD storage space 35, and accordingly to restrain the heat generated in the differential limitation mechanism 36, from being transmitted to the electric motor 22 through the oil. Further, it is possible to minimize transfer of the heat from the differential limitation mechanism 36 to the oil stored in the gear storage space 34.

While the preferred embodiment of this invention has been described in detail by reference to the drawings, it is to be understood that the invention may be otherwise embodied.

For example, in the above-described embodiment, the drive apparatus 28 constructed as described above is provided to drive the rear wheels 26. However, the present invention is applicable also to a driving apparatus provided to drive the front wheels 18 as well as to the rear-wheel driving apparatus 28. That is, the front-wheel driving apparatus 20 may have the same construction as the rear-wheel driving apparatus 28.

In the above-described embodiment, in the rear-wheel driving apparatus 28, the differential limitation mechanism 36 is disposed on the outer peripheral side of the rear left axle 24L. However, the differential limitation mechanism 36 may be disposed on an outer peripheral side of the rear right axle 24R. In this arrangement, too, the electric motor 22 and the differential limitation mechanism 36 are disposed on respective opposite sides of the speed reduction mechanism 30 in the width direction of the vehicle 10, and are disposed on respective opposite sides of the differential mechanism 32 in the width direction of the vehicle 10.

In the above-described embodiment, in the differential limitation mechanism 36, the engaging torque of the auxiliary friction-engaging-plate set 84 is adjusted by the electromagnetic solenoid 88, and the main friction-engaging-plate set 70 is pressed through the second cam member 80, the balls 82 and the first cam member 78. However, the differential limitation mechanism 36 may be modified as needed. That is, the present invention is applicable to any differential limitation mechanism, as long as the differential limitation mechanism includes the friction clutch and is configured to control the engaging torque of the friction clutch, for controlling the differential limiting torque by which the differential effect provided by the differential mechanism 32 is to be limited.

### NOMENCLATURE OF ELEMENTS

22: electric motor
24R, 24L: rear axles (pair of drive shafts)
26R, 26L: rear wheels (right and left drive wheels)
28: rear-wheel driving apparatus (driving apparatus)
30: speed reduction mechanism
32: differential mechanism
34: gear storage space (first storage space)
35: LSD storage space (second storage space)
36: differential limitation mechanism
65: first sealing member (sealing member)
67: second sealing member (sealing member)
70: main friction-engaging-plate set (heated portion of differential limitation mechanism)
84: auxiliary friction-engaging-plate set (heated portion of differential limitation mechanism)
88: electromagnetic solenoid (heated portion of differential limitation mechanism)
73: friction clutch

## Claims

1. A driving apparatus (28) for a vehicle (10), the driving apparatus (28) comprising:
an electric motor (22) as a drive force source (22) ;
a speed reduction mechanism (30) configured to reduce a speed of rotation transmitted from the electric motor (22) and to output the rotation;
a differential mechanism (32) configured to distribute a drive force transmitted from the speed reduction mechanism (30), to a pair of drive shafts (24R, 24L) connected to respective right and left drive wheels (26R, 26L) of the vehicle (10); and
a differential limitation mechanism (36) including a friction clutch (73), and configured to control an engaging torque of the friction clutch (73), for controlling a differential limiting torque by which a differential effect provided by the differential mechanism (32) is to be limited; **characterized in that**:
the electric motor (22) and the differential limitation mechanism (36) are disposed on respective opposite sides of the speed reduction mechanism (30), and are disposed on respective opposite sides of the differential mechanism (32).

2. The driving apparatus (28) according to claim 1, comprising a casing (29),
wherein the speed reduction mechanism (30) and the differential mechanism (32) are stored together with a lubricant in a first storage space (34) that is defined inside the casing (29),
wherein the differential limitation mechanism (36) is stored in a second storage space (35) that is defined inside the casing (29), and
wherein the first and second storage spaces (34, 35) are fluid-tightly separated from each other by at least one sealing member (65, 67).

3. The driving apparatus (28) according to claim 2,
wherein the at least one sealing member (65, 67) is disposed in a position that inhibits the lubricant stored in the first storage space (34) from being brought into contact with surroundings of at least one heated portion (70, 84, 88) of the differential limitation mechanism (36).

4. The driving apparatus (28) according to any one of claims 1-3,
wherein the electric motor (22) and the differential limitation mechanism (36) are disposed on the respective opposite sides of the speed reduction mechanism (30) in a width direction of the vehicle (10), and are disposed on the respective opposite sides of the differential mechanism (32) in the width direction of the vehicle (10).

5. The driving apparatus (28) according to any one of claims 1-4,
wherein the speed reduction mechanism (30) and the differential mechanism (32) cooperate with each other to constitute a drive-force transmitting device (30, 32) that is configured to transmit the drive force of the electric motor (22) to the pair of drive shafts (24R, 24L), and
wherein the electric motor (22) and the differential limitation mechanism (36) are disposed on respective opposite sides of the drive-force transmitting device (30, 32).

6. The driving apparatus (28) according to claim 5,
wherein the drive-force transmitting device (30, 32) includes a pair of gears (60, 62) that mesh with each other,
wherein the pair of gears (60, 62) consists of a gear (60) included in the speed reduction mechanism (30) and a gear (62) included in the differential mechanism (32), such that the drive force is to be transmitted between the speed reduction mechanism (30) and the differential mechanism (32) through the pair of gears (60, 62), and
wherein the electric motor (22) and the differential limitation mechanism (36) are disposed on respective opposite sides of the pair of gears (60, 62) in a direction parallel to axes of the pair of gears (60, 62).

## Patentansprüche

1. Antriebsvorrichtung (28) für ein Fahrzeug (10), wobei die Antriebsvorrichtung (28) Folgendes umfasst:
einen Elektromotor (22) als Antriebskraftquelle (22);
einen Drehzahlreduzierungsmechanismus (30), der dafür konfiguriert ist, eine vom Elektromotor (22) übertragene Drehzahl zu verringern und die Drehung auszugeben;
einen Differentialmechanismus (32), der dafür konfiguriert ist, eine Antriebskraft zu verteilen, die von dem Drehzahlreduzierungsmechanismus (30) auf ein Paar Antriebswellen (24R, 24L) übertragen wird, die mit den jeweiligen rechten und linken Antriebsrädern (26R, 26L) des Fahrzeugs (10) verbunden sind; und
einen Differentialbegrenzungsmechanismus (36), der eine Reibungskupplung (73) umfasst und dafür konfiguriert ist, ein Einrückdrehmoment der Reibungskupplung (73) zu steuern, um ein Differentialbegrenzungsdrehmoment zu steuern, durch das ein Differentialeffekt, der durch den Differentialmechanismus (32) bereitgestellt wird, begrenzt werden soll; **dadurch gekennzeichnet, dass**
der Elektromotor (22) und der Differentialbegrenzungsmechanismus (36) auf jeweils gegenüberliegenden Seiten des Drehzahlreduzierungsmechanismus (30) angeordnet sind, und auf jeweils gegenüberliegenden Seiten des Differentialmechanismus (32) angeordnet sind.

2. Antriebsvorrichtung (28) nach Anspruch 1, die ein Gehäuse (29) umfasst,
wobei der Drehzahlreduzierungsmechanismus (30) und der Differentialmechanismus (32) zusammen mit einem Schmiermittel in einem ersten Lagerraum (34) gelagert sind, der innerhalb des Gehäuses (29) definiert ist,
wobei der Differentialbegrenzungsmechanismus (36) in einem zweiten Lagerraum (35) gelagert ist, der innerhalb des Gehäuses (29) definiert ist, und
wobei der erste und der zweite Lagerraum (34, 35) durch mindestens ein Dichtungselement (65, 67) flüssigkeitsdicht voneinander getrennt sind.

3. Antriebsvorrichtung (28) nach Anspruch 2,
wobei das mindestens eine Dichtungselement (65, 67) in einer Position angeordnet ist, die verhindert, dass das im ersten Lagerraum (34) gelagerte Schmiermittel mit der Umgebung von mindestens einem beheizten Teil (70, 84, 88) des Differentialbegrenzungsmechanismus (36) in Kontakt gebracht wird.

4. Antriebsvorrichtung (28) nach einem der Ansprüche 1 bis 3,
wobei der Elektromotor (22) und der Differentialbegrenzungsmechanismus (36) auf den jeweils gegenüberliegenden Seiten des Drehzahlreduzierungsmechanismus (30) in einer Breitenrichtung des Fahrzeugs (10) angeordnet sind und auf den jeweils gegenüberliegenden Seiten des Differentialmechanismus (32) in Breitenrichtung des Fahrzeugs (10) angeordnet sind.

5. Antriebsvorrichtung (28) nach einem der Ansprüche 1 bis 4,
wobei der Drehzahlreduzierungsmechanismus (30) und der Differentialmechanismus (32) zusammenarbeiten, um eine Antriebskraftübertragungsvorrichtung (30, 32) zu bilden, die dafür konfiguriert ist, die Antriebskraft des Elektromotors (22) auf das Paar von Antriebswellen (24R, 24L) zu übertragen, und
wobei der Elektromotor (22) und der Differentialbegrenzungsmechanismus (36) auf jeweils gegenüberliegenden Seiten der Antriebskraftübertragungsvorrichtung (30, 32) angeordnet sind.

6. Antriebsvorrichtung (28) nach Anspruch 5,
wobei die Antriebskraftübertragungsvorrichtung (30, 32) ein Paar Zahnräder (60, 62) umfasst, die miteinander in Eingriff stehen,
wobei das Zahnradpaar (60, 62) aus einem Zahnrad (60) besteht, das in dem Drehzahlreduzierungsmechanismus (30) enthalten ist, und einem Zahnrad (62), das in dem Differentialmechanismus (32) enthalten ist, so dass die Antriebskraft zwischen dem Drehzahlreduzierungsmechanismus (30) und dem Differentialmechanismus (32) über das Zahnradpaar (60, 62) übertragen werden soll und
wobei der Elektromotor (22) und der Differentialbegrenzungsmechanismus (36) auf jeweils gegenüberliegenden Seiten des Zahnradpaares (60, 62) in einer Richtung parallel zu den Achsen des Zahnradpaares (60, 62) angeordnet sind.

## Revendications

1. Appareil d'entraînement (28) pour un véhicule (10), l'appareil d'entraînement (28) comprenant :
un moteur électrique (22) en tant que source de force d'entraînement (22) ;
un mécanisme de réduction de vitesse (30) configuré pour réduire une vitesse de rotation transmise depuis le moteur électrique (22) et pour fournir en sortie la rotation ;
un mécanisme différentiel (32) configuré pour distribuer une force d'entraînement transmise depuis le mécanisme de réduction de vitesse (30), à une paire d'arbres d'entraînement (24R, 24L) raccordés à des roues motrice droite et gauche (26R, 26L) respectives du véhicule (10) ; et
un mécanisme de limitation de différentiel (36) comportant un embrayage à friction (73), et configuré pour commander un couple de mise en prise de l'embrayage à friction (73), pour commander un couple de limitation de différentiel dont un effet différentiel fourni par le mécanisme différentiel (32) doit être limité ; **caractérisé en ce que** :
le moteur électrique (22) et le mécanisme de limitation de différentiel (36) sont disposés sur des côtés opposés respectifs du mécanisme de réduction de vitesse (30), et sont disposés sur des côtés opposés respectifs du mécanisme différentiel (32).

2. Appareil d'entraînement (28) selon la revendication 1, comprenant un carter (29),
dans lequel le mécanisme de réduction de vitesse (30) et le mécanisme différentiel (32) sont stockés ensemble avec un lubrifiant dans un premier espace de stockage (34) qui est défini à l'intérieur du carter (29),
dans lequel le mécanisme de limitation de différentiel (36) est stocké dans un deuxième espace de stockage (35) qui est défini à l'intérieur du carter (29), et
dans lequel les premier et deuxième espaces de stockage (34, 35) sont séparés de manière étanche aux fluide l'un de l'autre par au moins un élément d'étanchéité (65, 67).

3. Appareil d'entraînement (28) selon la revendication 2,
dans lequel l'au moins un élément d'étanchéité (65, 67) est disposé dans une position qui empêche le lubrifiant stocké dans le premier espace de stockage (34) d'être mis en contact avec l'environnement d'au moins une portion chauffée (70, 84, 88) du mécanisme de limitation de différentiel (36).

4. Appareil d'entraînement (28) selon l'une quelconque des revendications 1 à 3,
dans lequel le moteur électrique (22) et le mécanisme de limitation de différentiel (36) sont disposés sur les côtés opposés respectifs du mécanisme de réduction de vitesse (30) dans une direction de largeur du véhicule (10), et sont disposés sur les côtés opposés respectifs du mécanisme différentiel (32) dans la direction de largeur du véhicule (10).

5. Appareil d'entraînement (28) selon l'une quelconque des revendications 1 à 4,
dans lequel le mécanisme de réduction de vitesse (30) et le mécanisme différentiel (32) coopèrent l'un avec l'autre pour constituer un dispositif de transmission de force d'entraînement (30, 32) qui est configuré pour transmettre la force d'entraînement du moteur électrique (22) à la paire d'arbres d'entraînement (24R, 24L), et
dans lequel le moteur électrique (22) et le mécanisme de limitation de différentiel (36) sont disposés sur des côtés opposés respectifs du dispositif de transmission de force d'entraînement (30, 32).

6. Appareil d'entraînement (28) selon la revendication 5,
dans lequel le dispositif de transmission de force d'entraînement (30, 32) comporte une paire de pignons (60, 62) qui s'engrènent l'un avec l'autre,
dans lequel la paire de pignons (60, 62) consiste en un pignon (60) inclus dans le mécanisme de réduction de vitesse (30) et un pignon (62) inclus dans le mécanisme différentiel (32), de sorte que la force d'entraînement doive être transmise entre le mécanisme de réduction de vitesse (30) et le mécanisme différentiel (32) par le biais de la paire de pignons (60, 62), et
dans lequel le moteur électrique (22) et le mécanisme de limitation de différentiel (36) sont disposés sur des côtés opposés respectifs de la paire de pignons (60, 62) dans une direction parallèle aux axes de la paire de pignons (60, 62).
